# EUROPEAN PATENT APPLICATION

(11) **EP 4 606 564 A1**
(43) Date of publication of application: **27.08.2025**
(21) Application number: 25165842.3
(22) Date of filing: 03.02.2023
(51) Int. Cl.: B32B 5/02, B32B 5/26, B32B 13/14

(54) **BULIDING BOARD WITH INTEGRAL VAPOR-PERMEABLE WATER-RESISTANT SHEET MEMBRANE**

(30) Priority: 04.02.2022 US 202263306562 P; 31.01.2023 US 202363482455 P
(62) Divisional of application: 23715338.2
(71) Applicant: DDP Specialty Electronic Materials US, LLC, Wilmington, Delaware 19805 (US)
(72) Inventor: Broderick, Adam, Midland, 48674 (US); Katsaros, James Dean, Midlothian, 23113 (US)
(74) Representative: Abitz & Partner

(57) **Abstract**

A building board having an integral vapor-permeable water-resistant barrier (WRB) sheet, and a process for making same, and a two-material layered laminate useful for making said building board, wherein the building board comprises in order, a WRB sheet, a polymer tie layer, and a board substrate bonded together in a face-to-face relationship, the polymer tie layer comprising of a thermally or high frequency activated fibrous web and having voids through the thickness of said layer such that the polymer tie layer has a moisture vapor transmission rate through said layer of at least equal to or greater than that of the WRB sheet, the polymer of the polymer tie layer having an elastic modulus (G') greater than 1 x 10⁶ Pa at 20° C and a softening temperature of greater than 122° F (50 C) , the softening temperature being the temperature at which the polymer elastic modulus (G') drops below 30 percent of the elastic modulus (G') of the polymer at 20° C; and wherein the moisture vapor permeability through the building board is 5 perms or greater.

## Description

### Background of the Invention

Field of the Invention. This invention relates to materials for use with of vapor-permeable water-resistant barriers (WRBs) and board substrates and panels for building construction.

Description of Related Art. Board substrates, such as typical 4X8 building panels, are used in the construction of the outer faces of building walls, wherein a number of board substrates are attached to wall studs using mechanical fasteners (nails, screws, etc.). Further, for improved sealing of the building envelope and improved energy performance of the wall, a vapor-permeable water-resistant barrier (WRB) sheet can be installed on the outer surface of the walls as an air-infiltration barrier, this preformed sheet is typically mechanically fastened to the exterior face of the board substrates. Applying the WRB sheet to the outer of a wall after the wall has been constructed requires an additional step where the WRB sheet is first positioned on the wall surface and then attached to the wall.

United States Pat. No. 2005/0214496 to Borenstein discloses a self-adhering vapor permeable air and moisture barrier sheet that can be installed on the structural surfaces of a building without the use of mechanical fasteners. The vapor permeable air and moisture barrier sheet is made self-adhering by deposition of an adhesive on one side of the sheet in a noncontinuous film, leaving zones of uncoated membrane, thereby permitting the diffusion of water vapor through the sheet at the uncoated zones. A strippable release sheet or liner can then be deposited on the adhesive to enable packaging the self-adhering sheet in rolls. To use, the release sheet or liner can be separated to expose the adhesive for adhesion to a substrate. This type of "peel-and-stick" WRB sheet has challenges also when applied to the outer face of a building, including the tendency for the WRB sheet to stick to unwanted surfaces, such as itself, during installation. There are also environmental and sustainability issues with peel-and-stick WRB sheets. The use of the strippable release sheet or liner creates considerable waste, as the release sheet, which is thrown away, covers an area as large as the area of the WRB sheet that is installed. So, an amount of paper equivalent to the entire outer surface area of a building is thrown away when such WRB sheets are used.

A building board with an integral WRB sheet eliminates the need to apply a WRB sheet to an outer wall of a building after the wall is erected. Therefore, what is needed is a WRB sheet provided with a polymer tie layer that can be packaged in a roll without a release liner and used without the generation of release liner waste; and that can be further made integral with a board substrate while still functioning as a vapor-permeable water-resistant barrier.

### Brief Summary of the Invention

This invention relates to a process for providing a building board having an integral vapor-permeable water-resistant barrier (WRB) sheet, the process comprising the steps of
a) providing:
   i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
   ii) a polymer tie layer having an inner sheet face and an outer sheet face, the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
      wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C;
b) layering the WRB sheet and the polymer tie layer in a face-to-face relationship, with the inner face of the WRB sheet in contact with the outer sheet face of the polymer tie layer;
c) tacking the polymer tie layer to the WRB sheet by thermal energy, high frequency energy, pressure, or some combination of these to form a two-material layered laminate;
d) further providing
   iii) a board substrate having an inner and outer face;
e) layering the two-material layered laminate and the board substrate in a face-to-face relationship, with the inner sheet face of the polymer tie layer in contact with the outer face of the board substrate to form an unconsolidated building board;
f) bonding the two-material layered laminate to the board substrate by applying to the unconsolidated building board thermal or high frequency energy along with pressure to form a consolidated building board having an inner face and an outer face and a moisture vapor permeability through the board of 5 perms or greater.

This invention further relates to process for making a building board having an integral vapor-permeable water-resistant barrier (WRB) sheet, the process comprising the steps of
a) providing
   i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
   ii) a polymer tie layer having an inner sheet face and an outer sheet face, wherein the polymer tie layer has a basis weight of 17 to 70 grams per square meter (0.5 to 2 ounces per square yard), the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
      wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C; and
   iii) a board substrate having an inner and outer face;
b) layering i), ii) and iii) in a face-to-face relationship, with the inner face of the WRB sheet in contact with the outer face of the polymer tie layer, and the inner face of the polymer tie layer in contact with the outer face of the board substrate, to form an unconsolidated building board; and
c) bonding the unconsolidated building board with thermal or high frequency energy along with pressure to form a consolidated building board having an inner face and an outer face, and a moisture vapor permeability through the board of 5 perms or greater.

This invention also relates to a building board having an integral vapor-permeable water-resistant barrier (WRB) sheet, comprising:
i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours,
ii) a polymer tie layer having an inner sheet face and an outer sheet face, the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
   wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C; and
iii) a board substrate having an inner and outer face;
   wherein i), ii) and iii) are bonded together, in order, in a consolidated building board,
   the WRB sheet being in a face-to-face relationship with the polymer tie layer, with the inner face of the WRB sheet in contact with the outer face of the polymer tie layer;
   the board substrate being in a face-to-face relationship with the inner face of the polymer tie layer, with the inner face of the polymer tie layer in contact with the outer face of the board substrate; and
   wherein the moisture vapor permeability through the building board is 5 perms or greater.

This invention also further relates to a two-material layered laminate suitable for use in the making of a building board having an integral vapor-permeable water-resistant barrier (WRB) sheet, the two-material layered laminate comprising:
i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
ii) a polymer tie layer having an inner sheet face and an outer sheet face, wherein the polymer tie layer has a basis weight of 17 to 70 grams per square meter (0.5 to 2 ounces per square yard), the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
   wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C;
the WRB sheet tacked to the polymer tie layer in a face-to-face relationship, with the inner face of the WRB sheet in contact with the outer face of the polymer tie layer.

### Brief Description of the Drawings

**Figs. 1** & **2** are an expanded perspective view and a cross sectional view, respectively, of a building board having an integral WRB sheet, consisting of a WRB sheet, polymer tie layer consisting of one or more thermally or high frequency activated fibrous web(s), and a board substrate. These figures are not drawn to scale.
**Fig. 3** is a photo of a screw fastener overdriven into the surface of a building board having an integral WRB sheet.
**Fig. 4** is a photo of a building board having an integral WRB sheet that further has acceptable water holdout performance after testing; the screw fastener has been removed and the board cut through the centerline of the screw fastener hole to show no water damage to the board has occurred.
**Fig. 5** is a photo of a building board having an integral WRB sheet that did not have acceptable water holdout performance due to the fastener being driven too far into the building board; the screw fastener has been removed and the board cut through the centerline of the screw fastener hole to show the darkened areas where extensive water damage has occurred.
**Fig. 6** is a graph of the relationship between the basis weight of the polymer tie layer, consisting of one or more thermally or high frequency activated fibrous webs, versus the water vapor transport through the building board having an integral WRB sheet.
**Fig. 7** is a photo illustrating the appearance of various weights of the polymer tie layer in the building board after the thermally or high frequency activated fibrous web(s) has(have) been consolidated with the WRB and board substrate.

### Detailed Description of the Invention

The inventors have found that a building board with an integral WRB sheet eliminates the need to apply a WRB sheet to an outer wall of a building after the wall is erected. The WRB sheet can be provided with a polymer tie layer to form a two-material layered laminate that can be made and stored in roll form without the need for an additional release liner to protect the polymer tie layer from adhering to itself or other layers until it is desirable to do so. The two-material layered laminate can be further made integral with a board substrate while still functioning as a vapor-permeable water-resistant barrier, all without the generation of release liner waste.

### Building Board having an Integral WRB Sheet

The building board having an integral WRB sheet comprises in order, a WRB sheet, a polymer tie layer, and a board substrate, all bonded together in a face-to-face relationship. The polymer tie layer comprises one or more thermally or high frequency activated fibrous webs. All of the fibrous webs have web-like voids such that through the thickness of the polymer tie layer there are voids that allow the polymer tie layer to have a moisture vapor transmission rate through the layer that is at least equal to or greater than that of the WRB sheet. The voids are adequately retained after the WRB sheet, polymer tie layer, and board substrate are all bonded together. This allows the moisture vapor permeability through the building board to be 5 perms or greater.

The thermally or high frequency activated fibrous web(s) of the polymer tie layer are made from a polymer having an elastic modulus (G') of greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C. In some preferred embodiments, the thermally or high frequency activated fibrous web(s) of the polymer tie layer are made from a polymer having an elastic modulus (G') of greater than 1 x 10⁷ Pa at 20° C and a softening temperature of greater than 122° F (50 C), the softening temperature being the temperature at which the polymer elastic modulus (G') drops below 30 percent of the elastic modulus (G') of the polymer at 20° C. These properties ensure that the polymer tie layer is non-tacky and furthermore is non-blocking, and the two-material layered laminate can be packaged and used in rolls without a release liner.

By non-tacky, it is meant the layer will not adhere to itself simply by surface contact of one layer to another. Blocking is the term used to describe the tendency of some polymer sheets, when formed into rolls or placed in stacks, to adhere together with time and form a layered "block" of polymer, even at room temperature, despite the fact in their normal use as adhesives, the polymer sheets are heated to elevated temperatures as well as subjected to pressure to be made adhesive. By non-blocking, it is meant that the polymer tie layer is not only non-tacky, but also remains non-adhesive to other surfaces under pressure and a normal ambient temperature range (specifically ISO 11502, Method A) and remains unadhered until the polymer tie layer is activated by the application of thermal or high frequency energy.

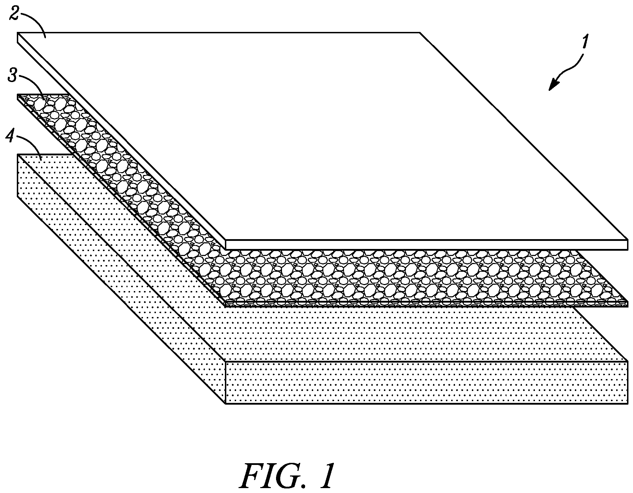

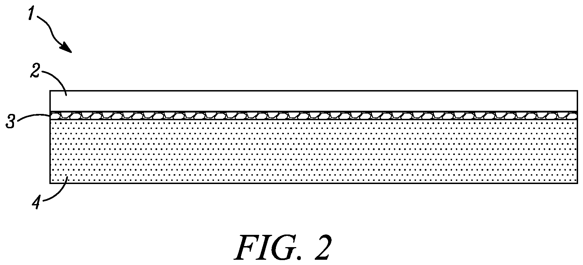

The phrase "building board having an integral WRB sheet" and "consolidated building board" are used interchangeably herein. The phrase "board substrate" refers to the substrate that is modified to make the building board having an integral WRB sheet. **Fig. 1** is an expanded perspective view and **Fig. 2** is a cross sectional view, not drawn to scale, of a consolidated building board **1** consisting of a WRB sheet **2,** polymer tie layer **3** consisting of a thermally or high frequency activated fibrous web, and a board substrate **4.**

Therefore, in one embodiment, the building board having an integral WRB sheet comprises:
i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours,
ii) a polymer tie layer having an inner sheet face and an outer sheet face, the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet; and
iii) a board substrate having an inner and outer face;
wherein i), ii) and iii) are bonded together, in order, in a consolidated building board, the WRB sheet being in a face-to-face relationship with the polymer tie layer, with the inner face of the WRB sheet in contact with the outer face of the polymer tie layer; the board substrate being in a face-to-face relationship with the inner face of the polymer tie layer, with the inner face of the polymer tie layer in contact with the outer face of the board substrate; and
wherein the moisture vapor permeability through the building board is 5 perms or greater.

This level of moisture vapor permeability through the building board (5 perms or greater) assures the building board will meet most building codes. In some embodiments, the building board having an integral WRB sheet has a moisture vapor permeability through the building board of 10 perms or greater.

The faces of the building board having an integral WRB sheet are generally the same shape as each of the faces of the board substrate, polymer tie layer, and WRB sheet; and this shape can be of any general shape (e.g., rectangular, triangular, round, etc.); although it is preferable that the faces all have a rectangular shape (which includes a square shape), that being the most preferred overall shape of boards for general building construction.

### Board Substrate

The building board having an integral WRB sheet can include any board substrate that is suitable for use in exterior walls as wall sheathing. Such board substrates are often made of wood such as plywood, oriented strand board (OSB) or particle board. In addition, other suitable boards include boards made from gypsum and magnesium oxide; boards that are themselves composite materials made from such things as wood fiber, continuous insulation, Thermoply^{™}, glass fiber, and fire retardant treated wood; and boards made from metal, lightweight concrete, mass timber, and structural glass. The boards can furthermore be sheathed with paper, aluminized coverings, or fibrous coverings such as glass fiber mats and the like. In some embodiments, the board substrate is a gypsum board, and in still some other embodiments the board substrate is a gypsum board further faced on both major sides with a glass fiber mat such as DensGlass^{®} Sheathing, a gypsum panel with fiberglass mat facings available from Georgia Pacific Gypsum.

The board substrate typically has two faces that form a plane and four minor edges that form the boundary of that plane. For example, in a common sheet of 4-foot by 8-foot half-inch plywood, each face has a dimension of 4-foot by 8-foot, while the thickness is slightly less than one-half inch. As used in a wall, the board substrate has an inner face, which is typically the face closer to the interior of the building; and an outer face, which is typically the face closer to the exterior of the building.

### Water-Resistant Barrier (WRB) Sheet

The water-resistant barrier (WRB) sheet has a basis weight 100 grams per square meter or less, a hydrostatic head of 55 cm or greater, a Gurley Hill porosity of 250 seconds or greater, and a moisture vapor transmission rate, measured by the LYSSY method, of at least 40 grams per square meter/24 hrs. In some other embodiments, the WRB sheet preferably has a moisture vapor transmission rate of at least 130 grams per square meter/24 hours, is substantially liquid impermeable, having preferably a hydrostatic head of at least 180 cm; and is substantially air impermeable, having preferably a Gurley Hill porosity of 300 seconds or greater. In some other embodiments, the WRB sheet preferably has a moisture vapor transmission rate of at least 370 grams per square meter/24 hours.

In some embodiments the WRB sheet has a basis weight range of from 50 to 100 grams per square meter. It is believed that a basis weight below about 50 grams per square meter is likely too weak to be used in construction, and a basis weight of greater than 100 grams per square meter is undesirable as the additional weight does not provide any appreciable mechanical benefit.

Preferred WRB sheets meet the requirements of building codes, such as ASTM E2556, Standard Specification for a WRB. This code requires a dry tensile strength (both machine direction and cross direction (MD/CD)) per ASTM D828 of at least 20 pounds force per inch, and a water resistance, per AATCC 127 (held at 55 cm), of no leakage in 5 hours.

In some embodiments, the WRB sheet has a hydrostatic head ranging from 55 to 1500 cm of water. It is believed a WRB sheet having a hydrostatic head of below 55 cm is too porous to liquids, and a WRB sheet having a hydrostatic head above 1500 cm generally requires additional sheet weight that may not be needed. In some embodiments, the WRB sheet has a hydrostatic head ranging from 180 to 1000 cm of water, with a hydrostatic head ranging from 200 to 500 cm of water being especially preferred.

In some embodiments, the WRB sheet has a Gurley Hill porosity ranging from 250 to 6000 seconds. It is believed a WRB sheet having a Gurley Hill porosity of below 250 seconds is too porous to air, and a WRB sheet having a Gurley Hill porosity above 6000 seconds generally requires additional sheet weight that is not believed to be especially needed for use in construction. In some embodiments, the WRB sheet has a Gurley Hill porosity ranging from 250 to 6000 seconds, with a Gurley Hill porosity ranging from 300 to 5000 seconds being especially preferred.

In some embodiments the WRB sheet has a "wet cup" LYSSY moisture vapor transmission rate ranging from 40 to 2000 grams per square meter/24 hrs. It is believed a measured moisture vapor transmission rate of less than 40 grams per square meter/24 hours may cause excessive liquid water to form on the surface of the WRB sheet, while a moisture vapor transmission rate of greater than 2000 grams per square meter/24 hours is adequate in even the most humid of circumstances. In some embodiments, a moisture vapor transmission rate of greater than 250 grams per square meter/24 hours is desired. Likewise, in some embodiments a moisture vapor transmission rate ranging from 65 to 1870 grams per square meter/24 hours is desirable, while in some other embodiments a moisture vapor transmission rate ranging from 130 to 1870 grams per square meter/24 hours is desirable. Preferably, in some embodiments the WRB sheet meets "dry-cup" water vapor transmission of a minimum of 5 perms, per ASTM E96/E96M.

Useful WRB sheets are generally any sheet material that does not allow or restricts movement of liquid water through the sheet but does allow some movement through the sheet of vapor, particularly water vapor. In some embodiments, the WRB sheet is polymeric. Preferred polymeric sheets are polyethylene (PE) or polypropylene (PP). One preferred WRB sheet is a nonwoven fibrous web of flash-spun plexifilamentary high-density PE (HDPE) fibers available from DuPont, Wilmington, DE sold under the tradename Tyvek^{®} Homewrap^{™} or Tyvek^{®} CommercialWrap. A suitable polypropylene substrate is available under the tradename Typar^{®} Building Wraps.

The water-resistant barrier sheet is preferably coextensive with and fully covers the outer face of the board substrate in the building board having an integral WRB sheet.

### Polymer Tie Layer

The polymer tie layer has an inner sheet face and an outer sheet face, the polymer tie layer comprising one or more thermally or high frequency activated fibrous web. By thermally or high frequency activated fibrous web, it is mean a fibrous web of polymer that can be at least be partially melted by the application of thermal energy, such as by the application of heat either by direct contact or in an oven, or by the application of high frequency energy, such as imposing an electromagnetic field as is used in high frequency welding equipment, or ultrasonic energy such as used in ultrasonic bonding equipment. As used herein, high frequency energy is intended to include ultrasonic energy.

The phrase "polymer tie layer" as used herein also means "the polymer tie layer material layer", meaning that the polymer tie layer can comprise multiple thermally or high frequency activated fibrous webs. These fibrous webs can have very low basis weights, so multiple laminas of these fibrous webs can be combined and used together as a polymer tie layer or as the polymer tie material layer. One preferred embodiment of a polymer tie layer uses multiple laminas of fibrous webs, wherein all of the laminas are the same fibrous web and are made from the same polymer.

Suitable thermally or high frequency activated fibrous webs include nonwoven fibrous webs made from straight-chain or branched thermoplastic hydrocarbon polymers, such as polyolefins (especially polyethylenes and polypropylenes), polyesters, polyurethanes, and other thermoplastic polymers such as polyamides, and mixtures and copolymers of any of these. Preferably the thermally or high frequency activated fibrous webs are nonwoven fibrous webs made from polyolefin polymer or copolymer.

The thermally or high frequency activated fibrous web(s) of the polymer tie layer are made from a polymer having an elastic modulus (G') of greater than 1 x 10⁶ Pa at 20° C and a softening temperature of greater than 122° F (50 C) . It is understood that the polymer in the thermally or high frequency activated fibrous web(s) have to soften by exposure of the webs to either thermal or by high frequency energy to achieve a temperature of 60 to 150° C. Preferably, the thermally or high frequency activated fibrous web(s) have to soften by exposure of the webs to either thermal or by high frequency energy to achieve a temperature of 90 to 120° C.

In some embodiments, the polymer used in the thermally or high frequency activated fibrous web further has a melting point of 60 to 150° C, and preferably a melting point of 80 to 120° C. In some other embodiments, the polymer used in the thermally or high frequency activated fibrous web has a melting point of 100 C (230° F) or less.

The polymer tie layer, as does the thermally or high frequency activated fibrous web that forms the polymer tie layer, has voids through the thickness of the layer such that the polymer tie layer and the thermally or high frequency activated fibrous web has a moisture vapor transmission rate through the layer that is at least equal to or greater than that of the WRB sheet, to avoid the polymer tie layer from being an unacceptable barrier to the passage of moisture vapor through the final building board having an integral WRB sheet. This is important in that the final consolidated building board has a moisture vapor permeability of 5 perms or greater.

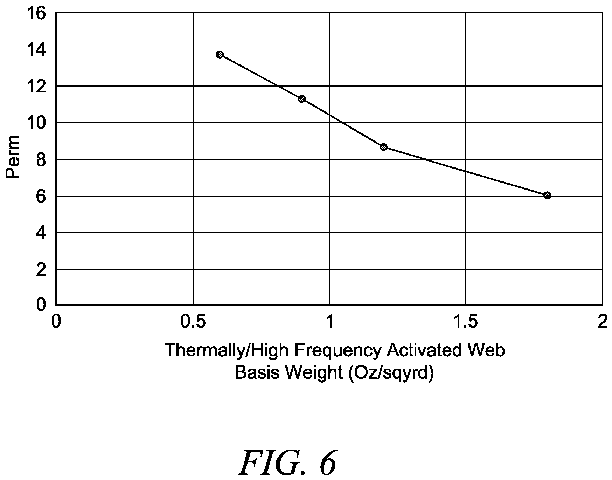

**Fig.** 6 is a graph of the relationship between the basis weight of the polymer tie layer, consisting of one or more thermally or high frequency activated fibrous web(s), versus the water vapor transport through the building board having an integral WRB sheet, evaluated using ASTM E96 Method B. As shown, as the basis weight of thermally or high frequency activated fibrous web decreases, the amount of moisture vapor that can travel through the consolidated building board increases.

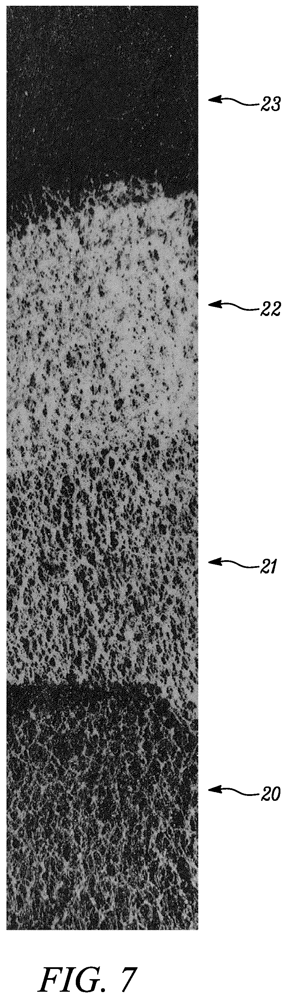

It is believed important that the fibrous web-like nature of the thermally or high frequency activated fibrous web be substantially retained after the thermally or high frequency activated fibrous web is consolidated into a polymer tie layer in the consolidated building board. To simulate the appearance of the polymer tie layer in the consolidated building board, an unconsolidated pseudo-building board was made by stacking a thermally or high frequency activated fibrous web onto a gypsum substrate board having an outer sheath of a fiberglass mat. Additionally, instead of stacking a WRB sheet on top of the thermally or high frequency activated fibrous web, a release paper liner was used in its place. The unconsolidated pseudo-building board was then placed in a Carver hydraulic press with metal platens heated to 120 C and pressed with 2000 pounds of force for 60 seconds. The consolidated pseudo-building board was then removed from the press, allowed to cool, and the release paper liner removed. The resulting polymer tie layer could be seen on the surface of the gypsum substrate board. To better visualize and confirm the polymer tie layer retained the fibrous web nature and voids between the bonded fibrous web-like strands, a black-tinted sealant was spread on the surface of the consolidated pseudo-building board, and then a metal spatula was used as a doctor blade to remove any excess black-tinted material from the surface of the polymer tie layer of adhered fibrous web while retaining the black-tinted material in the voids between the bonded fibrous web-like strands. **Fig. 7** is a photo of the appearance of various weights of the polymer tie layer used in this simulation, which is the same structure that would be expected after the thermally or high frequency activated fibrous web has been consolidated with the WRB sheet and the board substrate. The consolidated pseudo-building board was made using one or more layers of 10 g/m² (0.3 oz/yd²) thermally or high frequency activated fibrous web. **Fig. 7** illustrates a first area **20,** which had two layers of the 10 g/m² (0.3 oz/yd²) fibrous web, for a total of 20.3 g/m² (0.6 oz/yd²); a second area **21**, which had four layers of the 10 g/m² (0.3 oz/yd²) fibrous web, for a total of 40.7 g/m² (1.2 oz/yd²); a third area **22,** which had six layers of the 10 g/m² (0.3 oz/yd²) fibrous web, for a total of 61.0 g/m² (1.8 oz/yd²); and a control area **23**, which had no thermally or high frequency activated fibrous web.

Therefore, the previous simulation illustrates the desired open fibrous web structure can be maintained in the consolidated building board. The polymer tie layer has a total basis weight that is about 17 to 70 grams per square meter (0.5 to 2 ounces per square yard). Additionally, the estimated open area, or voided area of the polymer tie layer, is shown in **Table 1.**

**Table 1**

| Fibrous web Basis Weight oz/yd² (g/m²) | Estimated Open Area (%) |
|---|---|
| 0.6 (20.3) | 67 |
| 1.2 (40.7) | 44 |
| 1.8 (61.0) | 14 |

In some embodiments, the thermally or high frequency activated fibrous web has a basis weight of 34 grams per square meter (1.0 ounces per square yard) or less, which would provide an open area between the surface of WRB sheet and the surface of the building board of about 50%.

### Sealability to Overdriven Fasteners

Surprisingly, it has been found that the addition of the polymer tie layer comprising of a thermally or high frequency activated fibrous web, inserted between the surface of the WRB sheet and the surface of the board and attached to both, can dramatically reduce tears in the WRB sheet from certain overdriven fasteners during installation of the consolidated building board. The use of a fibrous web structure as the polymer tie layer further allows adequate moisture vapor to pass through the wall and also prevents lateral movement of air and water between the surface of the WRB sheet and the surface of the board.

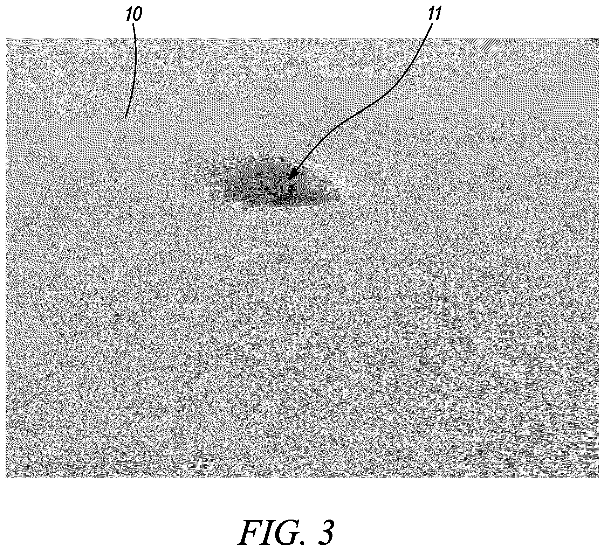

The concept of overdriven fasteners is illustrated in **Fig. 3. Fig. 3** is a photo of a screw fastener overdriven into the surface of the consolidated building board; as shown, the outer surface of the WRB sheet **10** is shown deflected and stretched into the surface of the board by the head of a Phillips-head screw fastener **11** embedded into the board; that is, the top surface of the Phillips-head screw fastener **11** is not flush with the outer surface of the WRB sheet at the board outer surface but is driven some linear distance below the board's outer surface. Again, as shown, the shoulders in the WRB sheet formed by the screw head are smooth and not torn, and it is likely this overdriven fastener has not compromised the liquid barrier performance function of the WRB sheet.

As used herein, the word "overdriven" means the top surface of a fastener is not flush with the outer surface of the WRB sheet at the board's outer face but is driven some linear distance into the board, below the outer building board surface. The word "fastener" is intended to include such things as screws, nails, staples, and other mechanical implements used to attach the consolidate building board in a wall. In some embodiments, the preferred fasteners are screws. The techniques used herein are expected to provide improved sealing performance for fasteners that are overdriven a linear distance into the building board, below its outer surface, of as much as 0.03 inches; and preferably, improved sealing performance is exhibited for fasteners that are overdriven linear a distance into the building board, below its outer surface, of as much as 0.04 inches, or even greater linear distances into the board.

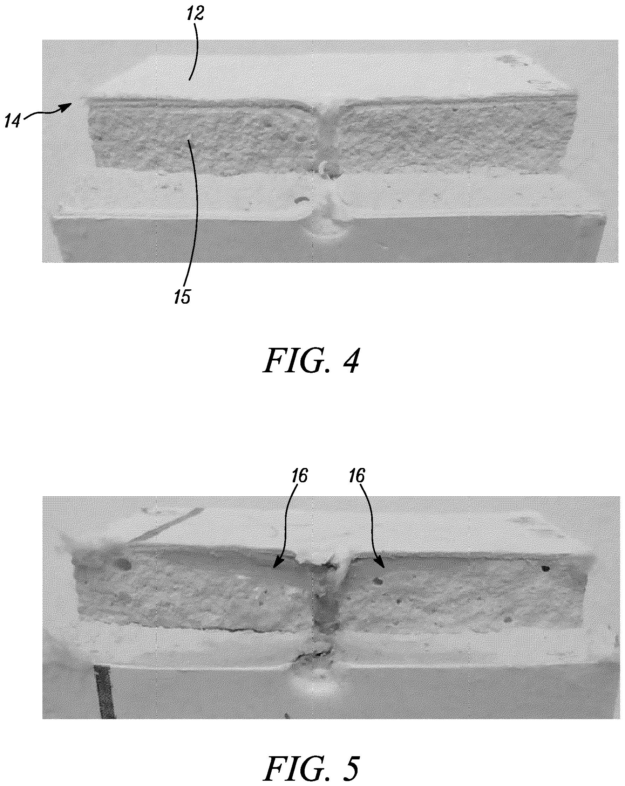

**Figs. 4** & **5** illustrate the sealing and leakage affect that can occur from overdriven fasteners. **Fig. 4** is a photo of a consolidated building board having acceptable water holdout performance after testing under a specified head of liquid water as described in the modified ASTM method D1970-15, as provided in the Test Methods herein. The consolidated building board contains a gypsum board substrate **15** and a WRB sheet **12,** with a polymer tie layer **14** inserted and bonded between the two. The consolidated building board has been tested for water leakage with an overdriven screw fastener that was overdriven into the consolidated building board 0.045 from the outer surface. After the testing, the screw fastener was removed, and the consolidated building board cut through the centerline of the screw fastener hole to reveal if any water penetrated beneath the WRB sheet. As shown in **Fig. 4****,** no water damage to the consolidated building board is present.

One the other hand, **Fig. 5** is a photo of a consolidated building board having unacceptable water holdout performance after testing. As in **Fig. 4****,** the consolidated building board was tested for water leakage with an overdriven screw fastener; however, in this instance the screw fastener was overdriven into the consolidated building board 0.06" from the outer surface. Again, after the testing, the screw fastener was removed, and the consolidated building board was cut through the centerline of the screw fastener hole to reveal water damaged (darkened) areas **16** in the gypsum board around the hole. Therefore, **Fig. 5** is an illustration of unacceptable sealing performance.

It is believed the polymer tie layer provides a cushioning effect to the WRB sheet when fasteners are driven into the consolidated building board; in that the polymer tie layer allows the WRB sheet to deform into the face of the building board rather than be torn on the surface of the building board. As such, in some embodiments, the thermally or high frequency activated fibrous web used in the polymer tie layer can have a basis weight of 17 to 70 grams per square meter (0.5 to 2 ounces per square yard). A basis weight of less than 17 g/m² (0.5 oz/yd²) is thought to not provide enough cushioning to the board, while a basis weight of more than 70 g/m² (2 oz/yd²) is not only less economical, but also starts to affect the moisture vapor transport through the board.

### Processes for Making Building Board with an Integral WRB sheet

In one embodiment, the invention relates to a process for providing a building board having an integral vapor-permeable water-resistant barrier (WRB) sheet, the process comprising the steps of:
a) providing:
   i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
   ii) a polymer tie layer having an inner sheet face and an outer sheet face, the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet;
b) layering the WRB sheet and the polymer tie layer in a face-to-face relationship, with the inner face of the WRB sheet in contact with the outer face of the polymer tie layer;
c) tacking the polymer tie layer to the WRB sheet by thermal energy, high frequency energy, pressure, or some combination of these to form a two-material layered laminate;
d) further providing
   iii) a board substrate having an inner and outer face;
e) layering the two-material layered laminate and the board substrate in a face-to-face relationship, with the inner face of the polymer tie layer in contact with the outer face of the board substrate to form an unconsolidated building board;
f) bonding the two-material layered laminate to the board substrate by applying to the unconsolidated building board thermal or high frequency energy along with pressure to form a consolidated building board having an inner face and an outer face, and a moisture vapor permeability through the board of 5 perms or greater.

The steps of b) of layering the WRB sheet and the polymer tie layer in a face-to-face relationship, and c) of tacking the polymer tie layer to the WRB sheet to form a two-material layered laminate, can be accomplished in either a batch, semi-continuous, or continuous process. For example, in a batch process, the polymer tie layer can be tacked to the WRB sheet by overlaying the WRB sheet with the polymer tie layer, and then placing the stack of two materials in a platen press wherein only one platen is heated, with the WRB sheet against that heated platen. The press is closed, and the heating can be very brief, i.e., a few seconds; as all that is required is to elevate the face of the polymer tie layer at the interface of the WRB sheet to allow it to be tacked to the WRB sheet. The temperature of the heated platen is dependent on the type of polymer used in the polymer tie layer and the desired residence time in the press. Additionally, the temperature of the heated platen should not be such that the WRB sheet is damaged.

Likewise, in a batch process, the steps of e) and f) to consolidate the two-material layered laminate and board substrate into a building board having an integral WRB sheet can be accomplished in a similar manner, by overlaying the substrate board with the two-material layered laminate, with the polymer tie layer in contact with the substrate board; and consolidating the combination of substrate board and two-material layered laminate between two heated platens in a press. Again, the temperature of the heated platens is dependent on the type of polymer used in the polymer tie layer, the desired residence time in the press and the type of WRB sheet; however, typically the platens should have a temperature of 90° C or greater. Typical processing ranges for consolidating the layers via a batch process are believed include temperature ranges of about 90° to about 200° C and pressure ranges of about 50 to about 300 KPa, with a residence time in the press being about 2 to about 60 seconds. These conditions are believed suitable for consolidating the two-material layered laminate and board substrate into a building board having an integral WRB sheet that maintains the voids in the polymer tie layer.

Continuous and semi-continuous processes would typically use WRB sheet provided in rolls, and if the polymer tie layer is also provided on rolls, then the two materials can be layered together using two or more unwinds that position and combine the sheets onto each other in a continuous process. This process has advantages in that the layered sheets can then be tacked together, wound into a roll, and the roll of two-material layered laminate can be packaged and stored. The roll of two-material layered laminate can then used to form a building board having an integral WRB sheet in a subsequent step or stored and used at a later time.

Methods of tacking the polymer layer to the WRB sheet include point bonding using calender rolls, using patterned ultrasonic bonding, using a continuous conveyor, and other methods that can impart small amounts of energy to elevate the face of the polymer tie layer at the interface of the WRB sheet to allow it to be tacked to the WRB sheet. As used herein, the process of tacking is considered to be applying only as much energy to the polymer tie layer as to activate the surface filaments of the thermally or high frequency activated fibrous web. This allows localized bonding of the two sheets together only as much as required to be able to use the two-material layered laminate as a single sheet. If some form of point or pattern bonding is used to tack the layers together, the two layers are considered tacked together if 50 percent or less of the total surface area of the WRB sheet face is connected to a sheet face of the polymer tie layer. In some instances, 20 percent or less of the total surface area of the WRB sheet face is connected to a sheet face of the polymer tie layer sheet. Preferably 10 percent or less of the total surface area of the WRB sheet face is connected to a sheet face of the polymer tie layer sheet, and most preferably only 5 percent or less of the total surface area of the WRB sheet face is connected to a sheet face of the polymer tie layer sheet.

Alternatively, the polymer layer and WRB sheet can be tacked together using a conveyor arrangement or belt press. For example, the WRB sheet-polymer tie layer combination can be advanced between two conveyors, one of which is heated and the other non-heated or cooled. The WRB sheet-polymer tie layer combination is oriented with the WRB sheet against the heated conveyor and the polymer tie layer against the non-heated or cooled conveyor. Enough heat penetrates the WRB sheet from the heated conveyor to the interface between the two materials as to activate the surface filaments of the polymer tie layer and tack that layer to the WRB sheet. Further, it is believed that if a plurality of thermally or high frequency activated fibrous web are used for the polymer tie layer, there are enough web-like voids between the web such that some surface filaments from each of those webs are able to be activated to tack all the webs and the WRB sheet together. Again, the temperature and pressure profile between the two conveyors is dependent on the polymer in the tie layer, the WRB sheet, and the speed of advancement (residence time) in the heated zone.

In a similar manner, a process for forming the two-material layered laminate can be accomplished by placing individually cut sheet(s) of the thermally or high frequency activated fibrous web (making up the polymer tie layer) onto a continuous WRB sheet that is indexed after the cut sheet(s) of polymer tie layer is(are) positioned. Again, the two materials can be further tacked by indexing through rolls or a press or a conveying system that lightly tacks one sheet to the other, one section at a time.

For any of these roll, conveyor, press, or contact processes that are used to tack the layers of the two-material laminate together, the polymer tie layer can be tacked to the WRB sheet by completely melting the web in selective locations to create adhesion of the polymer tie layer to the WRB sheet. The total surface area of adhesion between the polymer tie layer sheet face and the WRB sheet face, created by the melting of the polymer tie layer in this fashion, is in some embodiments 50 percent or less of the total surface area of the WRB sheet face that is connected to the polymer tie layer sheet face. In some instances, the adhesion between the polymer tie layer sheet face and the WRB sheet face, created by the melting of the polymer tie layer in this fashion, is preferably 20 percent or less of the total surface area of the WRB sheet face that is connected to the polymer tie layer sheet face. In some instances, the adhesion between the polymer tie layer sheet face and the WRB sheet face, created by the melting of the polymer tie layer in this fashion, is more preferably 10 percent or less of the total surface area of the WRB sheet face that is connected to the polymer tie layer sheet face; and in still some other instances, the adhesion between the polymer tie layer sheet face and the WRB sheet face, created by the melting of the polymer tie layer in this fashion, is most preferably 5 percent or less of the total surface area of the WRB sheet face that is connected to the polymer tie layer sheet face.

Likewise, the steps of e) layering the two-material layered laminate and the board substrate in a face-to-face relationship to form an unconsolidated building board, and f) bonding the unconsolidated building board to form a consolidated building board having an integral WRB sheet, can be accomplished in a matter similar to the formation of the prior two-material layered WRB sheet-polymer tie layer laminate; however, using the two-material layered laminate and the substrate board as the two layers in like manner. If the two-material layered laminate is in roll form, then the two-material layered laminate can be unwound onto a moving conveyor of board substrates to form unconsolidated building boards, followed by bonding and consolidating using a belt press or a series of calender rolls to form consolidated building boards. Alternatively, a process can be used wherein the two-material layered laminate and board substrates are combined using some combination of indexing to form the unconsolidated building boards, followed by bonding and consolidation using pressure and thermal and/or high frequency energy.

In even another process, it is believed that the polymer tie layer and WRB sheet can be applied to the board substrate directly after manufacture of the board substrate, if the board substrate retains adequate heat to activate the polymer tie layer. Alternatively, a similar result is believed to be achieved by heating the board substrate first, and then applying the polymer tie layer and WRB sheet. If desired, additional pressure can be applied to the combined materials in either process after the polymer tie layer/WRB sheet combination is applied to the heated board substrate.

There are many different continuous processing possibilities for consolidating the unconsolidated building board into a building board having an integral WRB sheet. The exact applied energy and pressure conditions for each continuous process are dependent on many variables, including the types of equipment and desired production rate, and types and amounts of WRB sheet, polymer tie layer and board substrate; however, it is believed that such conditions can be determined using the batch processing conditions previously provided herein as a general guide for conditions.

Any of the roll, conveyor, press, or contact processes previously described herein can be used to bond together the two-material layered laminate to the board substrate board to make a building board having an integral WRB sheet; or to bond individual material layers of WRB sheet, polymer tie layer and board substrate together to make a building board having an integral WRB sheet, using sufficient heat (and/or energy) and any needed pressure to make a building board having an integral WRB sheet. It is believed that the combination of the light basis weight of the polymer tie layer, along with its web-like voids, limits the spreading of the melted web on the surface of the board substrate, so even though the entire web is melted, it doesn't spread enough to form a continuous blocking film on the surface of the board (see Reference Example 1). The entire unconsolidated board can thereby be consolidated over a wide range of conditions; it is believed the bonding conditions of the board are only limited to the extent that the WRB sheet should not be damaged.

In some embodiments, the WRB sheet is considered integral in the consolidated building board if the WRB sheet is attached to the board substrate via the polymer tie layer such that the force to peel the WRB sheet from the board substrate is at least 0.2 pounds per linear inch, as determined by ASTM D3330 F-04. Otherwise, it believed the combination of WRB sheet, polymer tie layer and board substrate are not adequately consolidated together to be practically used as a single piece in some applications.

It is further understood that selected features and elements previously discussed herein can be used in a more direct process for making a building board having an integral vapor-permeable water-resistant barrier (WRB) sheet. For example, in some embodiments, this invention relates to process for making a building board having an integral vapor-permeable water-resistant barrier (WRB) sheet, the process comprising the steps of
a) providing
   i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
   ii) a polymer tie layer having an inner sheet face and an outer sheet face, wherein the polymer tie layer has a basis weight of 17 to 70 grams per square meter (0.5 to 2 ounces per square yard), the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet; and
   iii) a board substrate having an inner and outer face;
b) layering i), ii) and iii) in a face-to-face relationship, with the inner face of the WRB sheet in contact with the outer face of the polymer tie layer, and the inner face of the polymer tie layer in contact with the outer face of the board substrate, to form an unconsolidated building board; and
c) bonding the unconsolidated building board with thermal or high frequency energy along with pressure to form a consolidated building board having an inner face and an outer face, and a moisture vapor permeability through the board of 5 perms or greater.

As can be readily seen, this process provides a more direct method of achieving a building board having an integral vapor-permeable water-resistant barrier (WRB) sheet, as the two-material layered laminate is not first formed. It is understood and intended that the features, elements, and principles disclosed herein for the attachment of the two-material layer laminate to the substrate board using batch, semi-continuous, continuous, and other processes can also all be applied and used in this direct process with little or few modifications. They are not repeated here to avoid repetition.

### Two-Material Layered Laminate

It is believed the two-material layered laminate comprising the WRB sheet and the polymer tie-layer can be combined with various boards and panels in many different ways. Therefore, in still another embodiment, this invention relates to a two-material layered laminate suitable for use in the making of a building board having an integral WRB sheet, comprising
i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
ii) a polymer tie layer having an inner sheet face and an outer sheet face, wherein the polymer tie layer has a basis weight of 17 to 70 grams per square meter (0.5 to 2 ounces per square yard), the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet;
the WRB sheet tacked to the polymer tie layer in a face-to-face relationship, with the inner face of the WRB sheet in contact with the outer face of the polymer tie layer.

The two-material layered laminate can be made by the processes previously described herein; and can used in the processes previously described herein wherein a two-layered WRB sheet/polymer tie-layer laminate is combined with a board substrate and then bonded to that board with heat (and/or energy) and any needed pressure to make a building board having an integral WRB sheet. However, if desirable, it is believed the two-material layered laminate could also be used in the field and attached to walls with the polymer tie layer positioned between the WRB sheet and the wall surface with sufficient effort. Localized bonding to the wall surface can be achieved manually via a heated roller, heating block, or other equipment.

### Test Methods

Fastener Sealability. The capability of the WRB sheet to seal around fasteners was determined according to a modified ASTM method D1970-15. ASTM D1970-15 was modified as follows. The fasteners were self-drill Phillips Head drywall screws (#6) having a 4.13 cm length. The WRB sheet was tested on 4-inch by 4-inch (10.2 cm by 10.2 cm) square gypsum board samples that were 1.3 cm thick with a wood backing. For each WRB sheet test, single screw was driven into the center of each of four separate square gypsum board samples covered by the WRB sheet and into the wood backing. No spacer was used outside of the attached WRB sheet. Further differences with ASTM DI 970-15 were that the fastener heads were not flush with the outer surface of the board samples but were overdriven to varying depths into the board samples; and the testing period of three days was not conducted in a refrigeration unit at 5° C., but in a laboratory kept at 23° C (75° F and 50% relative humidity). The acceptance criteria for passing the fastener sealing test was no visible water was seen beneath the WRB sheet for each sample. The WRB sheet was considered to pass the test if no visible water was seen beneath the WRB sheet for all of the 4 replicate samples. The WRB sheet was considered to fail even if only one of the four samples did not pass.

### Example 1

This example illustrates one method of making a two-material layered laminate comprising a WRB sheet and a polymer tie layer.

The WRB sheet is Tyvek^{®} Commercial Wrap, a flashspun polyethylene sheet material having a basis weight of 92 g/m² (2.7 osy), a hydrostatic head of 280 cm, a Gurley Hill porosity of greater than 1500 seconds, and a moisture vapor transmission rate of 163 g/m² per 24 hours (ASTM E96, Method A).

The polymer tie layer is a non-tacky POF 4002 thermally-activated fibrous web obtained from Spunfab having a basis weight of 10 g/m² (0.3 osy). The polymer in polymer tie layer was measured and an elastic modulus (G') of 20 MPa (19.6 x 10⁶ Pa) at 20° C and a softening temperature of 95° C.

The two-material layered laminate comprising a WRB sheet and a polymer tie layer is made by cutting squares of identical size of the WRB sheet and the polymer tie layer, followed by overlaying a square of the WRB sheet with a square of the polymer tie layer, with a face of the polymer tie layer sample in surface-to-surface contact with a face of the WRB sheet sample. Depending on the basis weight of the individual polymer tie layer, more than one layer of the polymer tie layer is overlaid on the WRB sheet to make up the desired polymer tie material layer basis weight, with each of those polymer tie layers also being in surface-to-surface contact with each other. For example, use of two of the 10 g/m² (0.3 osy) fibrous webs provides a polymer tie material layer with a basis weight of 20 g/m² (0.6 osy). The four edges of the sheets are then aligned such that the edges of the polymer tie layer(s) and the edges of the WRB sheet sample are coextensive with one another. The polymer tie layer is then tacked to the WRB sheet by briefly heating the combined layers by contact in a press with only one side of the press heated, with the WRB sheet face (outer face opposite the polymer tie layer) in contact with the single heated platen. The heat is transferred through the WRB sheet to the interface with the polymer tie layer to melt a number of surface filaments to tack all the layers together. The resulting two-material layered laminate using the two sheets of the polymer tie layer has a total basis weight of about 112 g/m² (3.3 osy).

The resulting laminate samples are easily handled and rolled and do not further adhere to themselves are other materials until additional energy is applied to the laminate to activate the polymer tie layer.

### Example 2

This example illustrates one method of making a building board with an integral WRB sheet using the two-material layered laminate of Example 1. DensGlass^{®} Sheathing, a gypsum panel with fiberglass mat facings available from Georgia Pacific Gypsum, is cut into 4-inch by 4-inch (10.2 cm by 10.2 cm) square gypsum board samples. Likewise, 4-inch by 4-inch (10.2 cm by 10.2 cm) square samples of the two-material layered laminate comprising a WRB sheet and a polymer tie layer of Example 1 are also made. A square of the two-material layered laminate is then stacked and arranged on a square of gypsum board with the face of the polymer tie layer in surface-to-surface contact with a face of the gypsum board. The four edges of the two-material layered laminate and the gypsum board are then aligned so they are coextensive, and the aligned stack is placed in a Carver hydraulic press with metal platens that are heated to 120 C; the press is then closed, and the stack is pressed with 200 kPa of pressure for 60 seconds. The consolidated building board sample is then removed from the press and allowed to cool. The final building board has an outer layer of WRB sheet attached to the board substrate via the polymer tie layer

### Example 3

This example illustrates a method of making a building board with an integral WRB sheet that uses the materials of Example 1 but does not require pre-assembly of the WRB sheet and polymeric tie layer into a two-material layered laminate.

The DensGlass^{®} Sheathing is cut into 4-inch by 4-inch (10.2 cm by 10.2 cm) square gypsum board samples. Likewise, the same size square samples are cut from the WRB sheet, and the same size square samples are cut from the polymer tie layer. As in Example 1, multiple layers of the polymer tie layer can be used to achieve the desired basis weight of the polymer tie material layer. The polymer tie layer sample(s) are then stacked and arranged on the square sample of gypsum board with the face of one of the polymer tie layer samples in surface-to-surface contact with one of the faces of the gypsum board. The WRB sheet sample is then stacked and arranged on the polymer tie layer samples, again with a face of the WRB sheet sample in surface-to-surface contact with a face of the polymer tie layer samples.

The four edges of the square samples of the WRB sheet, the polymer tie layer(s), and the gypsum board are then aligned so they are coextensive, and the aligned stack is placed in a Carver hydraulic press with metal platens that is heated to 120 C. The press is then closed, and the stack is pressed with 200 kPa of pressure for 60 seconds. The sample of consolidated building board with an integral WRB sheet is then removed from the press and allowed to cool.

### Reference Example 1

This example illustrates the fibrous web-like voids present in the polymer tie layer are maintained in the final building board with an integral WRB sheet. A series of consolidated pseudo-building boards were made in the manner of Example 3; however, for convenience, a single board was used that had areas of varying basis weight of polymer tie layer was used to simulate the number of different board samples. Additionally, these samples were not made with the WRB sheet of Example 1, but with a silicone-lined release paper. The release paper was placed on top of the polymer tie layer in surface-to-surface contact with a face of the polymer tie layer, with the siliconized face of the release paper in contact with the polymer tie layer. Additionally, a control sample area was provided on the board, which contained only the board and silicone-lined release paper (no polymer tie layer material). The board samples were then consolidated with a press as described in Example 3. The board samples were then removed from the press, allowed to cool, and the release liner removed. The thermally-activated polymer tie layer could then be seen on the surface of the board, partially embedded into the fiberglass mat that is a facing of the board. To better visualize the fibrous web-like voids through the thickness of the polymer tie layer after it had been thermally-activated, black-tinted Dowsil^{™} 768 silicone sealant was applied to the surface of the board samples and then the excess sealant was removed, using a metal spatula as a doctor blade. The remaining sealant remained in the fibrous web-like voids through the thickness of the polymer tie layer. The boards are shown in **Fig. 7****,** which illustrates a first board sample **20** that was made from two layers of the 10 g/m² (0.3 osy) polymer tie layer, for a total of 0.6 osy; a second board sample **21,** which had four layers of the same polymer tie layer for a total of 1.2 osy; a third board sample **22,** which had six layers of the same polymer tie layer for a total of 1.8 ounces per square yard; and a board sample **23,** which was the control, having no polymer tie layer. Therefore, the fibrous web-like voids through the thickness of the polymer tie layer will be maintained in final building board with an integral WRB sheet after thermal activation and consolidation.

### Reference Example 2

This example illustrates how the polymer elastic modulus is linked to the non-blocking properties of the two-layer laminate that allow for rolling, storage, and use of the laminate without a release liner.

The polymer elastic modulus was measured by dynamic mechanical analysis using an Anton Parr rheometer w/ CTD600 torsional rheology fixture run in oscillatory mode. Two types of non-tacky polymer tie layers were used, both being thermally-activated fibrous webs obtained from Spunfab. Specifically, the polymer tie layers were POF 4002 having a nominal basis weight of 10 g/m² (0.3 osy) and PO 4605 having a basis weight of 6 g/m² (0.17 osy). A solid sheet of polymer from each tie layer was obtained by heating and compression molding 30-40 layers of the fibrous web tie layer. The resulting pressed sample was transparent with no visible bubbles, and 2-3 mm thick.

Also tested were two typical hot melt adhesives commonly used to manufacture laminate structures in construction applications, LA 3 (Lanco Adhesives) and HMA 6369 (Adhesive Compounders Inc). Both of these materials were tacky to the touch. A similar compression molding process was used to generate 2-3 mm thick samples for evaluation. From each of the samples a rectangular specimen 12.5 mm x 50 mm was cut for DMA evaluation.

Sample strain for testing was determined to be in the linear viscoelastic range using an amplitude sweep at a frequency of 1 rad/s. Storage modulus and loss tangent (tan(d)) were then measured at the determines strain, typically 1-5% strain, over a range of frequencies (ω = 0.1-100 rad/sec). **Table 2** below reports elastic modulus for 4 different polymers, recorded at a frequency ω = 0.1 rad/sec).

**Table 2**

| **Polymer Tie Layer** | **Polymer Elastic Modulus at 20° C (x 10⁶ Pa)** | **Blocking Pass/Fail (ISO 11502, Method A)** | **Polymer Softening Temperature F/C (reported)** |
|---|---|---|---|
| 4002 | 19.6 | Pass | >140 / 60 |
| 4065 | 25.8 | Pass | >140 / 60 |
| 6369 | 0.749 | Fail | NA |
| LA-3 | 0.233 | Fail | NA |

Laminate samples with each of the 4 hot melt polymers were also made and evaluated for non-blocking of the laminate films when self-rolled without a release liner. Testing was done following ISO 11502, Plastics - Film and sheeting - Determination of blocking resistance, Method A, with either the fibrous web polymer tie layers POF4002 or PO4605, or representative hot melt adhesives 6369 or LA-3, adhered or coated on the WRB sheet, which was again the Tyvek^{®} Commercial Wrap^{™}. Briefly, the laminate samples were made by sandwiching the polymer tie layer or hot melt adhesive between two layers of the WRB sheet (both printed and non-printed sides) and pressed with weights equivalent to 1 psi pressure in a 50° C oven for 24 hours. After cooling, the samples are evaluated as to whether the two layers of WRB sheet can be peeled apart with minimal force. A pass means the two layers of WRB sheet separate easily, while a fail means they do not separate under the prescribed peel conditions, or do so with significant damage. As shown in **Table 2,** only samples containing a tie layer with a sufficiently high elastic modulus, which has correlation to the deformability and tack of the polymer, are able to pass the test.

### Example 4

This example illustrates the improvement in sealability resulting from the combination of WRB sheet and the polymer tie layer. A series of building board samples were made as previously described in these examples along with board sample assemblies for fastener sealability testing. All of the board substrates utilized the DensGlass^{®} sheathing. The types of WRB sheet (one sample is a liquid WRB) and polymer tie layer are shown in **Table 3.** For the inventive examples, the polymer tie layers used were POF 4002 having a nominal basis weight of 10 g/m² (0.3 osy) and PO 4605 having a basis weight of 6 g/m² (0.17 osy). One or more layers of these fibrous webs were used to make up the polymer tie layer basis weights shown in **Table 3.** Example 4-7 was a calendered WRB sheet made from woven film strips that is additionally perforated to provide improved MVTR. While this sample is a building board having an integral WRB sheet, it did not have the advanced sealability properties. It is believed that in this instance, the woven film structure of the WRB sheet splits when the screw punctures the WRB sheet, allowing water to penetrate the structure via other routes.

Examples 4-A and 4-B are comparison examples, neither of which passed the sealability test described herein. For Example 4-A, the WRB sheet was the same as Examples 4-1 thru 4-6, however, the assembly contained no polymer tie layer and the WRB sheet was not adhered to the board in the test area. The WRB sheet was only adhered to the board around the edges by construction staples and the screw was driven into only the WRB sheet and board and not through any polymer tie layer, as the polymer tie layer was not present. Example 4-C was Securock^{®} ExoAir^{®} 430, an exterior gypsum board that is pre-coated with a fluid-applied WRB during manufacture. Therefore, neither a durable WRB sheet material, nor a polymer tie layer was used in this sample, and the screw head ripped the soft WRB on the surface of the board allowing water to penetrate beneath the fluid-applied WRB.

**Table 3**

| Item | WRB | Polymer Tie Layer Type | Polymer Tie Layer Weight (g/m²) | Polymer Elastic Modulus (x 10⁶ Pa) | Sealability |
|---|---|---|---|---|---|
| 4-1 | Tyvek^{®} | 4002 | 10 | 19.6 | Passed |
| 4-2 | Tyvek^{®} | 4002 | 20 | 19.6 | Passed |
| 4-3 | Tyvek^{®} | 4002 | 30 | 19.6 | Passed |
| 4-4 | Tyvek^{®} | 4605 | 6 | 25.8 | Passed |
| 4-5 | Tyvek^{®} | 4605 | 12 | 25.8 | Passed |
| 4-6 | Tyvek^{®} | 4605 | 24 | 25.8 | Passed |
| 4-7 | Everbilt^{®} | 4002 | 20 | 19.6 | Fail |
| 4-A | Tyvek^{®} | None | None | - | Fail |
| 4-B | Securock^{®} ExoAir^{®} | None | None | - | Fail |

### Example 5

This example illustrates the ability to apply the two-layer laminate of Example 1 to magnesium oxychloride-based (magnesium oxide) building panels, where the resulting assembly exceeds the required water vapor permeability. The steps outlined in Example 2 were followed to prepare a building board sample comprising an outer layer of Tyvek^{®} Commercial Wrap^{®} WRB sheet attached to one surface of modified ArmorWall^{®} sheathing via 30 g/m² of POF 4002 polymer tie layer. ArmorWall^{®} sheathing (available from DuPont) is a commercial magnesium oxychloride cement composite board with foam attached to one side. For this evaluation, the foam was removed prior to testing. The water vapor transmission rate of resulting assembly, evaluated using ASTM E96 Method B, was 6 perms.

The following represent preferred items of the present invention:
1. A process for providing a building board having an integral vapor-permeable water-resistant barrier (WRB) sheet, the process comprising the steps of
   a) providing:
      i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
      ii) a polymer tie layer having an inner sheet face and an outer sheet face, the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
         wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C;
   b) layering the WRB sheet and the polymer tie layer in a face-to-face relationship, with the inner face of the WRB sheet in contact with the outer sheet face of the polymer tie layer;
   c) tacking the polymer tie layer to the WRB sheet by thermal energy, high frequency energy, pressure, or some combination of these to form a two-material layered laminate;
   d) further providing
      iii) a board substrate having an inner and outer face;
   e) layering the two-material layered laminate and the board substrate in a face-to-face relationship, with the inner sheet face of the polymer tie layer in contact with the outer face of the board substrate to form an unconsolidated building board;
   f) bonding the two-material layered laminate to the board substrate by applying to the unconsolidated building board thermal or high frequency energy along with pressure to form a consolidated building board having an inner face and an outer face, and a moisture vapor permeability through the board of 5 perms or greater.
2. The process of item 1 wherein consolidated building board exhibits no water passage from the outer face of the WRB sheet to the board substrate from a fastener head overdriven 0.3 inches into the outer face of the consolidated building board.
3. The process of item 1 or 2 wherein consolidated building board exhibits no water passage from the outer face of the WRB sheet to the board substrate from a fastener head overdriven 0.4 inches into the outer face of the consolidated building board.
4. The process of any one of items 1 to 3 wherein the polymer tie layer is coextensive with the WRB sheet in the two-material layered laminate.
5. The process of any one of items 1 to 4 wherein the board substrate is coextensive with both the polymer tie layer and the WRB sheet in the consolidated building board.
6. The process of any one of items 1 to 5 wherein the polymer tie layer has a basis weight of 17 to 70 grams per square meter (0.5 to 2 ounces per square yard).
7. The process of any one of items 1 to 6 wherein the polymer tie layer comprises a plurality of lamina of the same thermally or high frequency activated fibrous web.
8. A building board having an integral vapor-permeable water-resistant barrier (WRB) sheet, comprising:
   i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours,
   ii) a polymer tie layer having an inner sheet face and an outer sheet face, the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
      wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C; and
   iii) a board substrate having an inner and outer face;
      wherein i), ii) and iii) are bonded together, in order, in a consolidated building board,
      the WRB sheet being in a face-to-face relationship with the polymer tie layer, with the inner face of the WRB sheet in contact with the outer sheet face of the polymer tie layer;
      the board substrate being in a face-to-face relationship with the polymer tie layer, with the inner sheet face of the polymer tie layer in contact with the outer face of the board substrate; and
      wherein the moisture vapor permeability through the building board is 5 perms or greater.
9. The building board of item 8 wherein the consolidated building board exhibits no water passage from the outer face of the WRB sheet to the board substrate from a fastener head overdriven 0.3 inches into the outer face of the consolidated building board.
10. The building board of item 8 or 9 wherein the consolidated building board exhibits no water passage from the outer face of the WRB sheet to the board substrate from a fastener head overdriven 0.4 inches into the outer face of the consolidated building board.
11. The building board of any one of items 8 to 10, wherein the polymer tie layer is coextensive with the WRB sheet in the two-material layered laminate.
12. The building board of any one of items 8 to 11 wherein the board substrate is coextensive with both the polymer tie layer and the WRB sheet in the consolidated building board.
13. The building board of any one of items 8 to 12 wherein the polymer tie layer has a basis weight of 17 to 70 grams per square meter (0.5 to 2 ounces per square yard).
14. The building board of any one of items 8 to 13 wherein the polymer tie layer comprises a plurality of lamina of the same thermally or high frequency activated fibrous web.
15. A process for making a building board having an integral vapor-permeable water-resistant barrier (WRB) sheet, the process comprising the steps of
   a) providing
      i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
      ii) a polymer tie layer having an inner sheet face and an outer sheet face, wherein the polymer tie layer has a basis weight of 17 to 70 grams per square meter (0.5 to 2 ounces per square yard), the polymer tie layer comprising of a thermally or high frequency activated fibrous web, the polymer tie layer further having voids through the thickness of said layer such that the polymer tie layer has a moisture vapor transmission rate through said layer of at least equal to or greater than that of the WRB sheet,
         wherein the polymer of the polymer tie layer has an elastic modulus (G') greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C; and
      iii) a board substrate having an inner and outer face;
   b) layering i), ii) and iii) in a face-to-face relationship, with the inner face of the WRB sheet in contact with the outer sheet face of the polymer tie layer, and the inner sheet face of the polymer tie layer in contact with the outer face of the board substrate, to form an unconsolidated building board; and
   c) bonding the unconsolidated building board with thermal or high frequency energy along with pressure to form a consolidated building board having an inner face and an outer face, and a moisture vapor permeability through the board of 5 perms or greater.
16. The process of item 15 wherein consolidated building board exhibits no water passage from the outer face of the WRB sheet to the board substrate from a fastener head overdriven 0.3 inches into the outer face of the consolidated building board.
17. The process of item 15 or 16 wherein consolidated building board exhibits no water passage from the outer face of the WRB sheet to the board substrate from a fastener head overdriven 0.4 inches into the outer face of the consolidated building board.
18. The process of any one of items 15 to 17 wherein the polymer tie layer is coextensive with the WRB sheet in the two-material layered laminate.
19. The process of any one of items 15 to18 wherein the board substrate is coextensive with both the polymer tie layer and the WRB sheet in the consolidated building board.
20. The process of any one of items 15 to19 wherein the polymer tie layer has a basis weight of 17 to 70 grams per square meter (0.5 to 2 ounces per square yard).
21. The process of any one of items 15 to 20 wherein the polymer tie layer comprises a plurality of lamina of the same thermally or high frequency activated fibrous web.
22. A two-material layered laminate suitable for use in the making of a building board having an integral vapor-permeable water-resistant barrier (WRB) sheet, the two-material layered laminate comprising:
   i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
   ii) a polymer tie layer having an inner sheet face and an outer sheet face, wherein the polymer tie layer has a basis weight of 17 to 70 grams per square meter (0.5 to 2 ounces per square yard), the polymer tie layer comprising of a thermally or high frequency activated fibrous web, the polymer tie layer further having fibrous web-like voids through the thickness of said layer such that the polymer tie layer has a moisture vapor transmission rate through said layer of at least equal to or greater than that of the WRB sheet,
      wherein the polymer of the polymer tie layer has an elastic modulus (G') of greater than 1 x 10⁶ Pa at 20° C and a softening temperature of greater than 122° F (50 C), the softening temperature being the temperature at which the polymer elastic modulus (G') drops below 30 percent of the elastic modulus (G') of the polymer at 20° C;
   wherein the WRB sheet is tacked to the polymer tie layer in a face-to-face relationship, with the inner face of the WRB sheet in contact with the outer sheet face of the polymer tie layer.
23. The two-material layered laminate of item 22 wherein the polymer tie layer is coextensive with the WRB sheet.
24. The two-material layered laminate of item 22 or 23 wherein the polymer tie layer comprises a plurality of lamina of the same thermally or high frequency activated fibrous web.

## Claims

1. A process for providing a building board having an integral vapor-permeable water-resistant barrier (WRB) sheet, the process comprising the steps of
a) providing:
i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
ii) a polymer tie layer having an inner sheet face and an outer sheet face, the polymer tie layer having a basis weight of 17 to 70 grams per square meter (0.5 to 2 ounces per square yard), the polymer tie layer comprising a thermally or high frequency activated fibrous web, the polymer tie layer further having voids through the thickness of said layer such that the polymer tie layer has a moisture vapor transmission rate through said layer of at least equal to or greater than that of the WRB sheet,
wherein the polymer of the polymer tie layer has an elastic modulus (G') greater than 1 x 10⁶ Pa at 20° C and a softening temperature of greater than 122° F (50° C), the softening temperature being the temperature at which the polymer elastic modulus (G') drops below 30 percent of the elastic modulus (G') of the polymer at 20° C;
b) layering the WRB sheet and the polymer tie layer in a face-to-face relationship, with the inner face of the WRB sheet in contact with the outer sheet face of the polymer tie layer;
c) tacking the polymer tie layer to the WRB sheet by thermal energy, high frequency energy, pressure, or some combination of these to form a two-material layered laminate;
d) further providing
iii) a board substrate having an inner and outer face;
e) layering the two-material layered laminate and the board substrate in a face-to-face relationship, with the inner sheet face of the polymer tie layer in contact with the outer face of the board substrate to form an unconsolidated building board;
f) bonding the two-material layered laminate to the board substrate by applying to the unconsolidated building board thermal or high frequency energy along with pressure to form a consolidated building board having an inner face and an outer face, and a moisture vapor permeability through the board of 5 perms or greater.

2. The process of claim 1 wherein the consolidated building board exhibits no water passage from the outer face of the WRB sheet to the board substrate from a fastener head overdriven 0.3 inches (0.762 cm) into the outer face of the consolidated building board.

3. The process of claim 1 or 2 wherein the consolidated building board exhibits no water passage from the outer face of the WRB sheet to the board substrate from a fastener head overdriven 0.4 inches (1.016 cm) into the outer face of the consolidated building board.

4. The process of any one of claims 1 to 3 wherein the polymer tie layer is coextensive with the WRB sheet in the two-material layered laminate.

5. The process of any one of claims 1 to 4 wherein the board substrate is coextensive with both the polymer tie layer and the WRB sheet in the consolidated building board.

6. The process of any one of claims 1 to 5 wherein the polymer tie layer comprises a plurality of lamina of the same thermally or high frequency activated fibrous web.

7. A two-material layered laminate suitable for use in the making of a building board having an integral vapor-permeable water-resistant barrier (WRB) sheet, the two-material layered laminate comprising:
i) a WRB sheet having an inner and outer face, the WRB sheet having a basis weight 100 grams per square meter or less, a hydrostatic head of 55 cm or greater, a Gurley Hill porosity of 250 seconds or greater, and a moisture vapor transmission rate, of at least 40 grams per square meter per 24 hours, and
ii) a polymer tie layer having an inner sheet face and an outer sheet face, the polymer tie layer having a basis weight of 17 to 70 grams per square meter (0.5 to 2 ounces per square yard), the polymer tie layer comprising a thermally or high frequency activated fibrous web, the polymer tie layer further having fibrous web-like voids through the thickness of said layer such that the polymer tie layer has a moisture vapor transmission rate through said layer of at least equal to or greater than that of the WRB sheet,
wherein the polymer of the polymer tie layer has an elastic modulus (G') of greater than 1 x 10⁶ Pa at 20° C and a softening temperature of greater than 122° F (50° C), the softening temperature being the temperature at which the polymer elastic modulus (G') drops below 30 percent of the elastic modulus (G') of the polymer at 20° C;
wherein the WRB sheet is tacked to the polymer tie layer in a face-to-face relationship, with the inner face of the WRB sheet in contact with the outer sheet face of the polymer tie layer.

8. The two-material layered laminate of claim 7 wherein the polymer tie layer is coextensive with the WRB sheet.

9. The two-material layered laminate of claim 7 or 8 wherein the polymer tie layer comprises a plurality of lamina of the same thermally or high frequency activated fibrous web.

10. A consolidated building board having an integral vapor-permeable water-resistant barrier (WRB) sheet, the building board comprising the two-material layered laminate of any one of claims 7 to 9 and further comprising (iii) a board substrate having an inner and outer face, wherein the two-material layered laminate is bonded to the board substrate in a face-to-face relationship, with the inner sheet face of the polymer tie layer in contact with the outer face of the board substrate, and wherein the building board has a moisture vapor permeability through the board of 5 perms or greater.

11. The building board of claim 10, wherein the building board exhibits no water passage from the outer face of the WRB sheet to the board substrate from a fastener head overdriven 0.3 inches (0.762 cm), preferably 0.4 inches (1.016 cm) into the outer face of the consolidated building board.
